# EUROPÄISCHE PATENTSCHRIFT

(11) **EP 3 374 646 B1**
(45) Veröffentlichungstag und Bekanntmachung des Hinweises auf die Patenterteilung: **26.08.2020**
(21) Anmeldenummer: 17794242.2
(22) Anmeldetag: 17.10.2017
(51) Int. Cl.: F16B 2/24, B60R 13/08, F16B 5/06, F16B 21/08

(54) **SYSTEM ZUR FESTLEGUNG EINES FLÄCHIGEN ELEMENTS AN EINEM BAUELEMENT UND BEFESTIGUNGSKLAMMER ZUR VERWENDUNG IN EINEM DERARTIGEN SYSTEM**
SYSTEM FOR FASTENING A PLANAR ELEMENT TO A COMPONENT AND FASTENING CLIP FOR USE IN SUCH A SYSTEM
SYSTÈME PERMETTANT DE FIXER UN ÉLÉMENT PLAN À UN ÉLÉMENT STRUCTURAL ET ATTACHE DE FIXATION DEVANT ÊTRE UTILISÉE DANS UN SYSTÈME DE CE TYPE

(30) Priorität: 20.10.2016 DE 202016008380 U
(43) Veröffentlichungstag der Anmeldung: 19.09.2018
(73) Patentinhaber: Charlotte Baur Formschaumtechnik GmbH, 87719 Mindelheim (DE)
(72) Erfinder: SPITZER, David, 87719 Mindelheim (DE); DEMEL, Otto, 69123 Heidelberg (DE); ENDRES, Markus, 69123 Heidelberg (DE); GERHARDT, Michael, 69123 Heidelberg (DE)
(74) Vertreter: Wiese, Gerhard
(86) Internationale Anmeldenummer: PCT/EP2017/076523
(87) Internationale Veröffentlichungsnummer: WO 2018/073272

(56) Entgegenhaltungen:
- WO-A2-2015/007277
- FR-A1- 2 700 587
- US-A1- 2004 155 162

## Beschreibung

Die vorliegende Erfindung betrifft ein System zur Festlegung eines flächigen Elements, das eine Aussparung aufweist, an einem Bauelement, das eine Öffnung mit wenigstens einer Rasteinrichtung aufweist, mit einer Befestigungsklammer gemäß dem Oberbegriff des Patentanspruchs 1. Die Befestigungsklammer weist einen Anlageabschnitt mit mindestens einer Anlageebene zur Anlage an eine erste Seite des flächigen Elements auf, die von der Öffnung abgewandt ist, und wobei die Befestigungsklammer ein erstes, flexibles Halteelement aufweist, das mit dem Anlageabschnitt verbunden ist und so ausgebildet ist, dass es nach Festlegung des flächigen Elements am Bauelement durch die Aussparung des flächigen Elements hindurch in die Öffnung eingreift, wenn die Anlageebene auf der ersten Seite des flächigen Elements aufliegt. Die Erfindung betrifft auch eine Befestigungsklammer zur Verwendung in einem derartigen System.

Aus der WO 2015/007277 A2 ist ein Befestigungssystem mit einer Halteklammer und einem mit dieser kooperierenden Isolierelement bekannt, das zur Verbindung zweier flächiger Bauteile verwendbar ist. Das Befestigungssystem ist aufgrund seiner Zweiteiligkeit aufwändig in Herstellung und Lagerhaltung. Das Befestigungssystem ist nicht für eine Vorpositionierung an einem der flächigen Bauteile vorgesehen, so dass auch die Handhabung umständlich ist, bei der zunächst Bohrungen in beiden flächigen Bauteilen zur Deckung gebracht werden müssen und erst dann die Halteklammer unter Führung im Isolierelement durch die Bohrungen hindurchdrückbar ist. US 2004/155162 A1 beschreibt eine Befestigungsklammer nach dem Stand der Technik.

In der Automobilindustrie und in weiteren Industriezweigen ist es oftmals nötig, flächige Elemente an Bauelementen festzulegen. Bei den flächigen Elementen kann es sich beispielsweise um Dämmmatten handeln. Diese müssen in Fahrzeugen teilweise an schwer zugänglichen Stellen montiert werden. Hier ist es wünschenswert, wenn sich die Dämmmatten schnell und einfach befestigen lassen. Es ist eine weitere Anforderung, eine ausreichend stabile Befestigung des flächigen Elements an einer Oberfläche des Bauelements zu gewährleisten.

Aus dem Stand der Technik sind Befestigungsklammern bekannt, die eine Festlegung eines flächigen Elements an einem Bauelement, das eine Bohrung mit einem Gewinde aufweist, erlauben. Bei dem Bauelement kann es sich um eine Wand, einen Metallkörper oder ein sonstiges Objekt handeln, das eine Oberfläche aufweist, an der das flächige Element festgelegt werden soll. Die vorbekannten Befestigungsklammern weisen eine Anlageebene mit einem flexiblen Halteelement auf. Das Halteelement wird durch eine Aussparung in dem flächigen Element hindurch in die Bohrung geführt und greift in die Bohrung ein. Die Befestigungsklammer wird so weit in die Aussparung eingeschoben, dass ein Anlageabschnitt der Befestigungsklammer auf einer Seite des flächigen Elements, die von der Bohrung abgewandt ist, aufliegt. In dieser Position besteht eine kraftschlüssige Verbindung zwischen einer Wand der Bohrung und dem Halteelement. Dadurch wird die Befestigungsklammer in der Bohrung gehalten. Die Befestigungsklammer kann aus der Bohrung entnommen werden, indem das Halteelement verbogen wird, sodass die kraftschlüssige Verbindung zwischen dem Halteelement und der Wand der Bohrung aufgehoben wird.

Vorbekannte Befestigungsklammern dieser Bauart weisen jedoch den Nachteil auf, dass deren Montage umständlich ist. Wird eine Befestigungsklammer in das flächige Element eingebracht, bevor das flächige Element an das Bauelement herangeführt worden ist, so fällt die Befestigungsklammer leicht aus dem flächigen Element heraus.

Der vorliegenden Erfindung liegt deshalb die Aufgabe zugrunde, ein System mit einer Befestigungsklammer und eine in einem derartigen System verwendbare Befestigungsklammer bereitzustellen, welche verbesserte Montageeigenschaften aufweisen.

Diese Aufgabe wird gelöst durch ein System mit den Merkmalen des Patentanspruchs 1 und durch eine in einem derartigen System verwendbare Befestigungsklammer gemäß Patentanspruch 14. Die Befestigungsklammer weist erfindungsgemäß ein zweites, elastisches Halteelement auf, das mit dem Anlageabschnitt verbunden ist und so ausgebildet ist, dass es durch die Aussparung des flächigen Elements hindurch das flächige Element an einer zweiten Seite des flächigen Elements, die der Bohrung zugewandt ist, so hintergreift, dass durch die Befestigungsklammer schon vor der Festlegung des flächigen Elements am Bauelement eine Anpresskraft auf die zweite Seite des flächigen Elements ausgeübt wird, wenn die Anlageebene auf der ersten Seite des flächigen Elements aufliegt.

Somit kann die Befestigungsklammer durch die Aussparung des flächigen Elements hindurchgeführt werden und dort sicher gehalten werden, bevor das flächige Element an dem Bauelement montiert worden ist. Die Befestigungsklammer übt nun eine Anpresskraft auf das flächige Element von beiden Seiten aus, und zwar auf der ersten Seite des flächigen Elements durch die Anlageebene und auf der zweiten Seite des flächigen Elements durch das zweite Halteelement. Hierdurch wird die Befestigungsklammer sicher in der Aussparung gehalten und kann nicht aus dieser herausfallen, bevor das flächige Element an dem Bauelement montiert wird. Somit können die Befestigungsklammern beim erfindungsgemäßen System beispielsweise bei einem Fahrzeug-Zulieferer bereits komplett am flächigen Element vormontiert werden. Beim Fahrzeughersteller müssen dann die Befestigungsklammern nur noch mit ihrem ersten Halteelement in die entsprechenden Öffnungen am jeweiligen Bauelement gedrückt werden. Hierdurch lassen sich die Taktzeiten bei einer Fließbandproduktion deutlich reduzieren.

Eine genaue Positionierung des flächigen Elements an einem Bauelement wird durch die erfindungsgemäße Befestigungsklammer ebenfalls erleichtert, denn das flächige Element kann mit der bereits daran befestigen Befestigungsklammer so lange über eine Oberfläche des Bauelements geschoben werden, bis das erste Halteelement in eine Öffnung in dem Bauelement eindringt. Die Öffnung kann somit leichter aufgefunden werden.

Zusätzlich dazu, dass die erfindungsgemäße Befestigungsklammer eine leichtere Vormontage ermöglicht, ist sie auch bei der Entfernung eines flächigen Elements von einem Bauelement besonders vorteilhaft. Bei den aus dem Stand der Technik vorbekannten Befestigungsklammern tritt das Problem auf, dass diese nach der Entnahme leicht aus einer Aussparung in dem flächigen Element herausfallen können. Dieses Problem tritt bei der erfindungsgemäßen Befestigungsklammer nicht auf, denn diese wird durch das zweite Halteelement sicher an dem flächigen Element gehalten. Wenn es gewünscht ist, die Befestigungsklammer aus dem flächigen Element zu entfernen, dann kann das zweite Halteelement zusammengedrückt werden und durch die Aussparung in dem flächigen Element hindurch aus diesem herausgezogen werden.

Wenn die Anlageebene an dem flächigen Element anliegt und das erste Halteelement in die Öffnung eingebracht ist, so kann das zweite Halteelement durch einen Rand der Öffnung so beiseite gedrückt werden, dass es auf die zweite Seite des flächigen Elements nicht mehr oder nur noch teilweise aufsetzt. Ist ein Querschnitt der Aussparung in dem flächigen Element allerdings kleiner als ein Querschnitt der Öffnung, so kann das zweite Halteelement weiterhin das flächige Element hintergreifen und auf dieses eine Kraft ausüben. Überraschenderweise hat es sich hierbei herausgestellt, dass durch das zweite Halteelement auch der Halt der Befestigungsklammer in der Öffnung verbessert wird. Aufgrund des zweiten Befestigungselements ergibt sich eine verbesserte Stabilität der Befestigungsklammer gegenüber Kräften, die auf die Befestigungsklammer ausgeübt werden. Dadurch kann eine kraftschlüssige oder eine formschlüssige Verbindung des ersten Halteelements mit der Öffnung verbessert werden.

Vorzugsweise greift das erste Halteelement so in die Öffnung ein, dass eine kraftschlüssige Verbindung zwischen dem ersten Halteelement und der Öffnung entsteht. Das erste Halteelement kann erfindungsgemäß aber auch eine sonstige Verbindung mit der Öffnung eingehen, beispielsweise eine Magnetverbindung oder eine formschlüssige Rastverbindung.

Besonders bevorzugt sind das erste Halteelement und das zweite Halteelement flächig ausgebildet. Erfindungsgemäß können das erste und das zweite Halteelement als zungenförmige, langgestreckte Elemente ausgebildet sein. Solchermaßen ausgebildete Elemente lassen sich einfach aus gängigen Werkstoffen herstellen und sind aufgrund ihrer Form in einer zu einer flachen Seite des zungenförmigen Elements senkrechten Richtung leicht biegbar.

Gemäß einer besonderen Ausführungsform der Erfindung ist die Öffnung als Bohrung und die Rasteinrichtung als quer zur Achse der Bohrung verlaufende Nut, insbesondere als mehrere voneinander beabstandete Nuten oder als Gewinde mit wenigstens einer Gewinderille ausgebildet. Ein Gewinde als Rasteinrichtung ist an vielen Bauelementen in einfacher Weise herstellbar. Dabei greift das erste Halteelement in eine Gewinderille des Gewindes ein, wenn die Anlageebene auf der ersten Seite des flächigen Elements aufliegt, sodass die Befestigungsklammer in dem Gewinde in einer zu dem Gewinde axialen Richtung festgelegt ist. Gemäß dieser Ausführungsform wird ein besonders starker Halt der Befestigungsklammer in der Bohrung erreicht, denn es wird eine formschlüssige Verbindung zwischen der Befestigungsklammer und dem Gewinde bzw. der Nut hergestellt. Um die Befestigungsklammer in die Bohrung einzubringen, kann sie entlang des Gewindes in dieses eingedreht werden.

Gemäß möglicher Ausführungsformen der Erfindung kann die Befestigungsklammer jedoch auch zunächst gleitend über mehrere Gewinderillen oder Nuten hinwegbewegt werden, bevor sie in einer Gewinderille oder Nut einrastet.

Die Befestigungsklammer kann aus der Bohrung durch eine Drehbewegung entfernt werden. Alternativ zu einer Bohrung mit einem Gewinde kann die Öffnung auch einen anderen, beispielsweise ovalen, quadratischen oder rechteckigen Querschnitt aufweisen und die Gewinderillen durch Quernuten ersetzt werden. Das erste Haltelement kann auch exakt so dimensioniert sein, dass es eine Öffnung in einem Bauelement vollständig durchgreift und sich an einer an die Unterseite der Öffnung anschließenden inneren oder rückwärtigen Wandung des Bauelements anlegt.

Das erste Halteelement ist so ausgebildet, dass es dazu geeignet ist, in das Gewinde oder die Nut der Öffnung einzugreifen. Während das erste Halteelement aus der Bohrung herausgedreht wird, kann das zweite Halteelement noch eine Anpresskraft auf das flächige Element ausüben, sodass die Drehbewegung stabilisiert wird. Alternativ dazu ist es aber auch möglich, das zweite Halteelement aus der Aussparung zu lösen, bevor das erste Befestigungselement vollständig aus der Öffnung herausgedreht worden ist.

Bevorzugt weist das erste Halteelement einen ersten Schenkel auf, der in einen zweiten Schenkel mündet, wobei der erste Schenkel und der zweite Schenkel einen spitzen Winkel einschließen. Durch einen solchen Aufbau kann das elastische erste Halteelement seine Haltefunktion bei einem niedrigen Materialaufwand besonders gut erfüllen. Der Winkel zwischen dem ersten und dem zweiten Schenkel lässt sich vorzugsweise elastisch verändern.

Gemäß der Erfindung weist das zweite Haltelement einen ersten Schenkel auf, der in einen zweiten Schenkel mündet, wobei der erste Schenkel und der zweite Schenkel einen spitzen Winkel einschließen. Durch einen solchen Aufbau kann das elastische zweite Halteelement seine Haltefunktion bei einem niedrigen Materialaufwand besonders gut erfüllen. Der Winkel zwischen dem ersten und dem zweiten Schenkel lässt sich vorzugsweise elastisch verändern.

Ganz besonders bevorzugt sind der erste Schenkel und der zweite Schenkel des ersten Halteelements durch ein Verbindungselement voneinander beabstandet, wobei der erste Schenkel und der zweite Schenkel so ausgerichtet sind, dass zwei gedachte Geraden, die durch den ersten Schenkel und den zweiten Schenkel verlaufen, entweder parallel zueinander verlaufen oder einen Winkel bis 20°, vorzugsweise kleiner 10° einschließen. Dies erlaubt eine besonders gute Wirkverbindung des ersten Halteelements mit der Öffnung.

Erfindungsgemäß kann an einem Ende des zweiten Schenkels des ersten Halteelements ein erster Halteabschnitt ausgebildet sein, der in einem Winkel von 25° bis 65°, vorzugsweise zwischen 35° und 55° auf einer dem Gewinde zugewandten Seite des ersten Halteelements zu dem zweiten Schenkel des ersten Halteelements ausgerichtet ist. Aufgrund seines Neigungswinkels ist das Halteelement dazu geeignet, in eine Windung des Gewindes bzw. ein Nut in der Seitenwand der Öffnung einzugreifen. Das Halteelement kann elastisch ausgebildet sein. In diesem Fall kann das Halteelement aufgrund seines Neigungswinkels beim Einschieben der Befestigungsklammer in die Bohrung über mehrere Nuten oder Windungen eines Gewindes herüber- beziehungsweise hindurchgezogen werden. Wird jedoch versucht, die Befestigungsklammer aus der Bohrung herauszuziehen, so kann das Halteelement aufgrund seines Neigungswinkels nicht in solcher Weise elastisch verformt werden, dass es sich aus der Nut oder Windung, in die es eingreift, löst.

Vorzugsweise ist das erste Halteelement zu einer Halteelementspitze hin verjüngt ausgebildet. Dies erleichtert einen Eingriff des Halteelements in eine Windung des Gewindes der Bohrung. Das erste Halteelement kann dabei in einer dreieckigen oder einer abgerundeten Form zu der Halteelementspitze hin verjüngt ausgebildet sein. Es sind erfindungsgemäß aber auch weitere Formen möglich, in denen das erste Halteelement zu der Halteelementspitze hin verjüngt sein kann. Erfindungsgemäß kann der erste Schenkel des ersten Halteelements eine Sicke oder eine Ausbuchtung aufweisen. Dies vermindert die Elastizität des ersten Schenkels des ersten Halteelements. Außerdem wird hierdurch eine definierte Fläche bereitgestellt, um flächig an einer Innenwand der Öffnung anzuliegen. Es hat sich herausgestellt, dass eine Ausführung der Befestigungsklammer, die eine Sicke in dem ersten Schenkel des ersten Halteelements aufweist, besonders gut in die Öffnung eingreift und das Halteelement dabei aufgrund des Gegendrucks der Sicke besonders große Haltekräfte auszuüben vermag.

Zwischen dem ersten Schenkel und dem zweiten Schenkel des zweiten Halteelements ist vorzugsweise ein Winkel von 25° bis 65°, vorzugsweise zwischen 35° bis 55° vorgesehen. Aufgrund seines Neigungswinkels ist das Halteelement dazu geeignet, eine große Rückhaltekraft auf das flächige Element auszuüben, wobei es außerdem dazu geeignet ist, durch die Aussparung in dem flächigen Element hindurchgeführt zu werden. Drückt man den ersten und den zweiten Schenkel des zweiten Halteelements zusammen, so ist es möglich, die Befestigungsklammer aus der Aussparung in dem flächigen Element herauszuziehen.

Erfindungsgemäß kann an einem Ende des zweiten Schenkels des zweiten Halteelements ein in einem rechten Winkel von dem zweiten Schenkel des zweiten Halteelements abzweigender zweiter Halteabschnitt vorgesehen sein. Der zweite Halteabschnitt ist vorzugsweise flächig ausgebildet. Ein solcher abzweigender Halteabschnitt vergrößert eine Fläche, auf der das zweite Halteelement eine Anpresskraft auf das flächige Element auszuüben vermag. Dadurch sitzt das zweite Haltelement besonders stabil auf dem flächigen Element auf. Durch den nach innen abgebogenen zweiten Halteabschnitt kann außerdem das flächige Element leichter seitlich in dessen Richtung verschoben werden.

Gemäß einer möglichen Ausführungsform der Erfindung ist das erste Halteelement an der Anlageebene mit dem Anlageabschnitt verbunden. Hält die Befestigungsklammer ein flächiges Element an einem Bauelement, so wird durch das zweite Halteelement die Befestigungsklammer und damit auch die Anlageebene an das flächige Element herangedrückt, wodurch die Anlageebene durch eine äußere Einwirkung auf die Befestigungsklammer nur schwerlich verschoben werden kann. Damit ist das an der Anlageebene vorgesehene erste Halteelement besonders belastbar gegenüber äußeren Einwirkungen, wenn das flächige Element an dem Bauelement befestigt ist.

Gemäß einer weiteren Ausführungsform der Erfindung ist das zweite Halteelement mit dem Anlageabschnitt an einer Schwenkebene verbunden, wobei die Schwenkebene elastisch mit der Anlageebene verbunden ist. Somit wird der zweite Anlageabschnitt elastisch an der Befestigungsklammer gehalten. Wird die Befestigungsklammer durch die Aussparung des flächigen Elements hindurchgeführt, so kann die Schwenkebene in Richtung der Anlageebene geneigt werden. Dies erlaubt es dem zweiten Halteelement, das flächige Element zu hintergreifen. Je dicker das flächige Element ausgebildet ist, umso weiter muss die Schwenkebene in Richtung der Anlageebene geneigt werden, damit das zweite Halteelement das flächige Element hintergreifen kann.

Ganz besonders bevorzugt ist die Schwenkebene von der Anlageebene durch mindestens ein Beabstandungselement beabstandet. Hierdurch wird es vermieden, dass die Schwenkebene direkt auf die Anlageebene aufsetzt, wenn die Schwenkebene in Richtung der Anlageebene geneigt wird. Hierdurch wird es vermieden, dass die Schwenkebene zu weit in Richtung der Anlageebene geneigt wird, wobei ein Übergangsbereich zwischen der Schwenkebene und der Anlageebene so beschädigt werden könnte, dass die Schwenkebene und die Anlageebene nicht mehr elastisch miteinander verbunden sind.

Alternativ sind das erste Halteelement und das zweite Halteelement in einer Ebene angeordnet. Dies erlaubt eine besonders kompakte Ausgestaltung der Befestigungsklammer. Ein solcher Aufbau ist ferner zweckmäßig, da hierdurch eine Kontaktstelle des ersten Halteelements mit der Öffnung und eine Kontaktstelle des zweiten Halteelements mit dem flächigen Element in einer Ebene liegen, wodurch die Befestigungsklammer besonders stabil an der Öffnung und dem flächigen Element anliegt.

Ganz besonders bevorzugt ist die Befestigungsklammer einstückig ausgeführt. Eine einstückig ausgeführte erfindungsgemäße Befestigungsklammer ist besonders stabil und kann in einfacher Weise gefertigt werden. Gemäß einer besonderen Ausführungsform der Erfindung ist die Befestigungsklammer aus einem Metall oder aus einer Metalllegierung ausgeführt. Erfindungsgemäß ist eine Fertigung der Befestigungsklammer aus einem Blechstreifen möglich, aus dem ein Abschnitt ausgestanzt wird, aus der anschließend durch eine Verbiegung des Abschnitts die erfindungsgemäße Befestigungsklammer hergestellt wird. Dieses Herstellungsverfahren erlaubt es, eine einstückige Befestigungsklammer kostengünstig herzustellen.

Es ist besonders vorteilhaft, wenn die Befestigungsklammer aus Stahl ausgeführt ist. Stahl erfüllt in ganz besonderer Weise die Anforderungen einer erfindungsgemäßen Befestigungsklammer im Hinblick auf die Parameter Zugfestigkeit, Elastizität und insbesondere Hitzebeständigkeit. Eine aus Stahl - insbesondere aus Federstahl - gefertigte Befestigungsklammer behält auch noch bei hohen Temperaturen ihre vorteilhaften Halteeigenschaften.

Es ist erfindungsgemäß ebenfalls möglich, dass die Befestigungsklammer aus einem geeigneten Kunststoffmaterial hergestellt ist, das eine ausreichende Festigkeit sowie federnde Eigenschaften aufweist. Geeignete Kunststoffmaterialien sind beispielsweise Polyamid, Polyoxymethylen oder Polybutylenterephthalat.

Eine besonders vorteilhafte Anwendung eines erfindungsgemäßen Systems sieht vor, dass als flächiges Element eine Verkleidungsplatte, eine Dämmplatte oder ein Dämmkörper zur aerodynamischen, designbedingten, haptischen, akustischen und/oder thermischen Verkleidung oder Dämmung im Automobil-Bereich verwendet wird. Derartige Verkleidungs- oder Dämmplatten müssen sehr häufig unter erschwerten Bedingungen in immer enger werdenden Motorräumen, als Innenverkleidung an schwer zugänglichen Stellen des Fahrzeug-Innenraums oder im Außenbereich eines Fahrzeugs (beispielsweise als Unterbodenschutz oder Unterboden-Verkleidungsteil) montiert werden. Das erfindungsgemäße System bietet hierfür eine wesentliche Vereinfachung bei der Vormontage, beim Transport und bei der Endmontage.

Für eine vorstehend im Zusammenhang mit dem erfindungsgemäßen System bereits im Detail spezifizierte Befestigungsklammer zur Verwendung in einem erfindungsgemäßen System wird auch als separates Bauteil ein eigenständiger Schutz beansprucht. Ebenso wird ein eigenständiger Schutz beansprucht für ein flächiges Element, in dessen Aussparungen derartige Befestigungsklammern vormontiert angeordnet sind.

Vorteilhafte Ausführungsformen der Erfindung sind in den Zeichnungen dargestellt. Dabei zeigt:
Fig. 1 eine schematische Darstellung einer Befestigungsklammer in einer Seitenansicht,
Fig. 2 eine schematische Darstellung der Befestigungsklammer in einer Draufsicht,
Fig. 3 eine schematische Darstellung der Befestigungsklammer in einer Vorderansicht und
Fig. 4 eine schematische Darstellung der Befestigungsklammer in einem System bei der Verbindung eines flächigen Elements mit einem Bauelement in einer Querschnittsansicht.

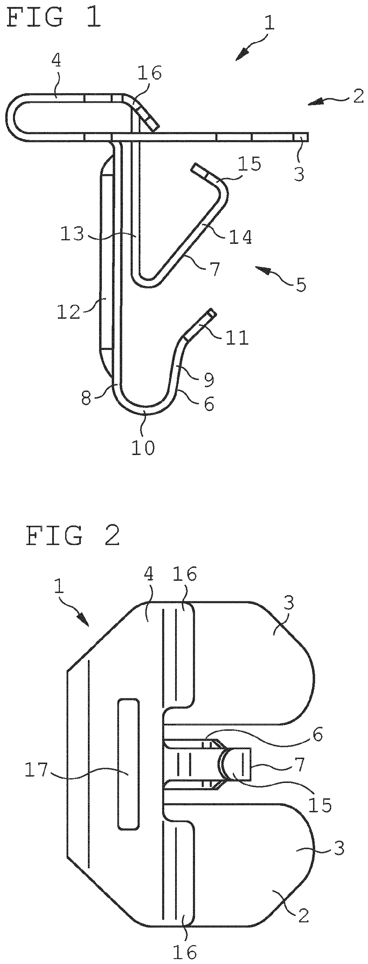

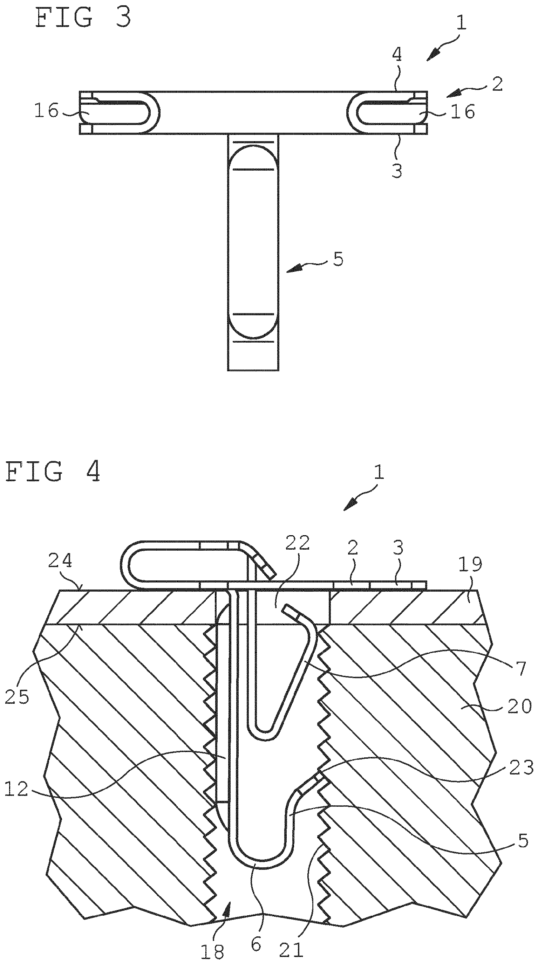

Fig. 1 zeigt eine schematische Darstellung einer möglichen Ausführungsform des erfindungsgemäßen Systems mit einer darin bevorzugt verwendeten Befestigungsklammer 1 in einer Seitenansicht. Die Befestigungsklammer 1 weist einen Anlageabschnitt 2 auf. Der Anlageabschnitt 2 ist dazu geeignet, auf einer ersten Seite eines flächigen Elements 19 (siehe Fig. 4) aufgesetzt zu werden. Der Anlageabschnitt 2 umfasst zu diesem Zweck eine Anlageebene 3. Er umfasst ferner eine Schwenkebene 4. Die Befestigungsklammer 1 weist außerdem einen Verbindungsabschnitt 5 auf. Der Verbindungsabschnitt 5 dient dazu, eine sichere Verbindung der Befestigungsklammer 1 mit dem flächigen Element 19 und einem Bauelement 20 (siehe Fig. 4) zu gewährleisten. Dazu weist der Verbindungsabschnitt 5 ein erstes Halteelement 6 und ein zweites Halteelement 7 auf. Erstes Halteelement 6 und zweites Halteelement 7 können alternativ auch ohne einen gemeinsamen Verbindungsabschnitt 5 separat am Anlageabschnitt 2 angeordnet sein.

Das erste Halteelement 6 ist dazu geeignet, in eine vorzugsweise als Bohrung 18 ausgebildete Öffnung 18 am Bauelement 19 einzugreifen, sodass die Befestigungsklammer 1 nicht aus der Bohrung 18 herausgezogen werden kann. Das zweite Halteelement 7 ist dazu geeignet, das flächige Element 19 so zu hintergreifen, dass durch die Befestigungsklammer 1 eine Anpresskraft auf eine zweite Seite 25 des flächigen Elements ausgeübt wird, wenn die Anlageebene 3 auf einer ersten Seite 24 des flächigen Elements 19 aufliegt. Somit wird die Befestigungsklammer 1 an dem flächigen Element 19 vormontiert gehalten, auch ohne dass dieses bereits am Bauelement 20 angeordnet ist.

Das erste Halteelement 1 ist mit der Anlageebene 3 verbunden. Das zweite Halteelement 7 ist mit der Schwenkebene 4 verbunden. Die Anlageebene 3 ist mit der Schwenkebene 4 elastisch verbunden, sodass die Schwenkebene 4 in Richtung des flächigen Elements 19 verschwenkt werden kann, damit das zweite Halteelement 7 flächige Elemente unterschiedlicher Dicken hintergreifen kann. Jedoch ist das zweite Halteelement 7 auch selbst elastisch, sodass es seine Form auch zu diesem Zweck anzupassen vermag.

Hierdurch wird das erste Halteelement 6 gegenüber Kräften, die relativ zu der Öffnung 18 in radialer Richtung auf die das erste Halteelement 6 wirken, stabilisiert. Das erste Halteelement 6 weist einen ersten Schenkel 8, einen zweiten Schenkel 9 und ein Verbindungselement 10 zwischen dem ersten Schenkel 8 und dem zweiten Schenkel 9 auf. An einem Ende des zweiten Schenkels 9 weist das erste Halteelement 6 einen ersten Halteabschnitt 11 auf, der dazu geeignet ist, in eine Gewinderille 23 eines Gewindes 21 oder in eine Nut 23, die eine Rasteinrichtung 21 in der Bohrung 18 bilden, einzugreifen. Der erste Schenkel 8 weist eine Ausbuchtung 12 auf.

Das zweite Halteelement 7 umfasst einen ersten Schenkel 13 und einen zweiten Schenkel 14. An einem Ende des zweiten Schenkels 13 befindet sich ein zweiter Halteabschnitt 15, der dazu geeignet ist, eine Kraft auf die zweite Seite des flächigen Elements 19 auszuüben. Die Befestigungsklammer 1 ist einstückig aus Stahl ausgeführt. Die Schwenkebene 4 ist von der Anlageebene 3 durch ein Beabstandungselement 16 beabstandet.

Fig. 2 zeigt eine schematische Darstellung der erfindungsgemäßen Befestigungsklammer 1 gemäß Fig. 1 in einer Draufsicht. Der Anlageabschnitt 2 weist zwei Anlageebenen 3 auf. In der Schwenkebene 4 befindet sich eine Nut 17. Gezeigt sind außerdem die zwei Beabstandungselemente 16, die an der Schwenkebene 3 vorgesehen sind, das erste Halteelement 6, das zweite Halteelement 7 und der zweite Halteabschnitt 15. Der zweite Halteabschnitt 15 ist zu einem Ende hin verjüngt und abgerundet ausgebildet.

Fig. 3 zeigt eine schematische Darstellung der erfindungsgemäßen Befestigungsklammer 1 gemäß Fig. 1 und 2 in einer Vorderansicht. Dabei sind der Anlageabschnitt 2 und der Verbindungsabschnitt 5 gezeigt. Die Anlageebene 3, die Schwenkebene 4 und zwei Beabstandungselemente 16 sind in dem Anlageabschnitt 2 sichtbar. In dem Verbindungsabschnitt 5 ist lediglich das erste Halteelement 6 mit der Ausbuchtung 12 sichtbar.

Fig. 4 zeigt eine schematische Darstellung des erfindungsgemäßen Systems. Das System umfasst die bereits vorstehend im Detail beschriebene auch für sich gesehen erfindungsgemäße Befestigungsklammer 1, das mit wenigstens einer Aussparung 22 versehene flächige Element 19 und das Bauelement 20, an dem das flächige Element 19 mittels bevorzugt mehrerer voneinander beabstandeter Befestigungsklammern 1 festlegbar ist. Eine Bohrung 18 des Bauelements 20 ist mit einer darin aufgenommenen Befestigungsklammer 1 in einer Querschnittsansicht dargestellt. Dabei hält die Befestigungsklammer 1 das flächige Element 19 am Bauelement 20, in das die Bohrung 18 eingebracht ist. Die Bohrung 18 weist ein als Rasteinrichtung 21 ausgebildetes Gewinde 21 auf. Die Befestigungsklammer 1 ist durch eine Aussparung 22 in dem flächigen Element 19 hindurchgeführt. Diese Ausführungsform weist keine Beabstandungselemente 16 auf. Mit dem ersten Halteelement 6 greift die Befestigungsklammer 1 in eine als Rastung dienende Gewinderille 23 des Gewindes 21 oder in eine entsprechende quer zur Achse der Öffnung bzw. Bohrung 18 verlaufende Nut 23 ein. Dabei legt sich das erste Halteelement 6 mit seiner Sicke bzw. Ausbuchtung 12 an eine gegenüberliegende Seite der Öffnung 18 an. Die Befestigungsklammer 1 sitzt somit fest in der Bohrung bzw. Öffnung 18 und kann nicht aus dieser entfernt werden.

Das flächige Element 19 weist eine erste Seite 24 und eine zweite Seite 25 auf. Die Anlageebene 3 der Befestigungsklammer 1 liegt auf der ersten Seite 24 auf. Die zweite Seite 25 des flächigen Elements 19 liegt auf dem Bauelement 20 auf. Das zweite Halteelement 7 kann in diesem fertig montierten Zustand das flächige Element 19 nicht mehr hintergreifen, da die Bohrung 18 einen Durchmesser aufweist, der ungefähr einem Durchmesser der Aussparung 22 des flächigen Elements 19 entspricht und die Befestigungsklammer 1 beim Eindrücken in die Bohrung 18 soweit verschoben wurde, dass der abgewinkelte obere Teil des zweiten Halteelements 7 sich in der Öffnung 22 so weit nach links bewegt hat, dass er außer Eingriff mit der zweiten Seite 25 des flächigen Elements 19 geraten ist.

Das erfindungsgemäße System und die darin bevorzugt verwendete Befestigungsklammer sind besonders vorteilhaft für eine Vormontage an Dämmplatten oder Dämmkörpern zur akustischen und/oder thermischen Dämmung im Automobil-Bereich und für deren anschließende Endmontage an einem Automobil verwendbar.

### BEZUGSZEICHENLISTE

- 1: Befestigungsklammer
- 2: Anlageabschnitt
- 3: Anlageebene
- 4: Schwenkebene
- 5: Verbindungsabschnitt
- 6: Erstes Haltelement
- 7: Zweites Halteelement
- 8: Erster Schenkel des ersten Halteelements
- 9: Zweiter Schenkel des ersten Halteelements
- 10: Verbindungselement
- 11: Erster Halteabschnitt
- 12: Ausbuchtung
- 13: Erster Schenkel des zweiten Haltelements
- 14: Zweiter Schenkel des zweiten Haltelements
- 15: Zweiter Halteabschnitt
- 16: Beabstandungselement
- 17: Nut
- 18: Öffnung(Bohrung)
- 19: Flächiges Element
- 20: Bauelement
- 21: Rasteinrichtung (Gewinde)
- 22: Aussparung
- 23: Rastung (Gewinderille; Nut)
- 24: Erste Seite des flächigen Elements 19
- 25: Zweite Seite des flächigen Elements 19

## Patentansprüche

1. System umfassend ein flächiges Element (19), ein Bauelement (20) und eine Befestigungsklammer (1) zur Festlegung des flächigen Elements (19), das eine Aussparung (22) aufweist, am Bauelement (20), das eine Öffnung (18) mit wenigstens einer Rasteinrichtung (21) aufweist, mittels der Befestigungsklammer (1), die einen Anlageabschnitt (2) mit mindestens einer Anlageebene (3) zur Anlage an einer ersten, von der Öffnung (18) abgewandten Seite (24) des flächigen Elements (19) aufweist, wobei die Befestigungsklammer (1) ein elastisches erstes Halteelement (6) aufweist, das mit dem Anlageabschnitt (2) verbunden und so ausgebildet ist, dass es nach Festlegung des flächigen Elements (19) am Bauelement (20) durch die Aussparung (22) des flächigen Elements (19) hindurch in die Öffnung (18) eingreift, wenn die Anlageebene (3) auf der ersten Seite (24) des flächigen Elements (19) aufliegt, **dadurch gekennzeichnet, dass** die Befestigungsklammer (1) ein elastisches zweites Halteelement (7) aufweist, das mit dem Anlageabschnitt (2) verbunden und so ausgebildet ist, dass es vor der Festlegung des flächigen Elements (19) am Bauelement (20) durch die Aussparung (22) des flächigen Elements (19) hindurch das flächige Element (19) an einer zweiten Seite (25) des flächigen Elements (19) so hintergreift, dass durch die Befestigungsklammer (1) eine Anpresskraft auf die zweite Seite (25) des flächigen Elements (19) ausgeübt wird, wenn die Anlageebene (3) auf der ersten Seite (24) des flächigen Elements (19) aufliegt und wobei das zweite Halteelement (7) der Befestigungsklammer (1) einen ersten Schenkel (13) aufweist und in einen zweiten Schenkel (14) mündet, wobei der erste Schenkel (13) und der zweite Schenkel (14) einen spitzen Winkel einschließen.

2. System nach Anspruch 1, **dadurch gekennzeichnet, dass** die Öffnung (18) als Bohrung (18) und die Rasteinrichtung (21) als wenigstens eine Nut (23) oder als Gewinde (21) mit wenigstens einer Gewinderille (23) ausgebildet ist, wobei das erste Halteelement (6) der Befestigungsklammer (1) in die Nut (23) oder Gewinderille (23) eingreift, wenn die Anlageebene (3) auf der ersten Seite des flächigen Elements (19) aufliegt, sodass die Befestigungsklammer (1) in der Nut (23) oder Gewinderille (23) in einer zur Öffnung (18) axialen Richtung festgelegt ist.

3. System nach einem der vorhergehenden Ansprüche, **dadurch gekennzeichnet, dass** das erste Halteelement (6) der Befestigungsklammer (1) einen ersten Schenkel (8) aufweist und in einen zweiten Schenkel (9) mündet, wobei der erste Schenkel (8) und der zweite Schenkel (9) einen spitzen Winkel einschließen.

4. System nach Anspruch 3, **dadurch gekennzeichnet, dass** der erste Schenkel (8) und der zweite Schenkel (9) des ersten Halteelements (6) durch ein Verbindungselement (10) voneinander beabstandet sind, wobei der erste Schenkel (8) und der zweite Schenkel (9) so ausgerichtet sind, dass sie parallel zueinander ausgerichtet sind oder einen Winkel bis zu 20°, vorzugsweise kleiner 10° einschließen.

5. System nach Anspruch 3 oder Anspruch 4, **dadurch gekennzeichnet, dass** an einem Ende des zweiten Schenkels (9) des ersten Halteelements (6) ein erster Halteabschnitt (11) ausgebildet ist, der in einem Winkel von 25° bis 65°, vorzugsweise zwischen 35° bis 55° auf einer der Nut (23) oder Gewinderille (23) zugewandten Seite des ersten Halteelements (6) zu dem zweiten Schenkel (9) des ersten Halteelements (6) ausgerichtet ist.

6. System nach einem der Ansprüche 3 bis 5, **dadurch gekennzeichnet, dass** das erste Halteelement (6) zu einer Halteelementspitze hin verjüngt ausgebildet ist.

7. System nach einem der Ansprüche 3 bis 6, **dadurch gekennzeichnet, dass** der erste Schenkel (8) des ersten Halteelements (6) eine Sicke oder eine Ausbuchtung (12) aufweist.

8. System nach einem der Ansprüche 3 bis 7, **dadurch gekennzeichnet, dass** zwischen dem ersten Schenkel (13) und dem zweiten Schenkel (14) des zweiten Halteelements (7) ein Winkel von 25° bis 65°, vorzugsweise zwischen 35° bis 55° vorgesehen ist.

9. System nach einem der Ansprüche 4 bis 8, **dadurch gekennzeichnet, dass** an einem Ende des zweiten Schenkels (14) des zweiten Halteelements (7) ein in einem Winkel von dem zweiten Schenkel (14) des zweiten Halteelements (7) abzweigender, zum ersten Schenkel (13) weisender zweiter Halteabschnitt (15) vorgesehen ist.

10. System nach einem der vorhergehenden Ansprüche, **dadurch gekennzeichnet, dass** das zweite Halteelement (7) an einer Schwenkebene (4) mit dem Anlageabschnitt (2) verbunden ist, wobei die Schwenkebene (4) elastisch mit der Anlageebene (3) verbunden ist.

11. System nach Anspruch 10, **dadurch gekennzeichnet, dass** die Schwenkebene (4) von der Anlageebene (3) durch mindestens ein Beabstandungselement (16) beabstandet ist.

12. System nach einem der vorhergehenden Ansprüche, **dadurch gekennzeichnet, dass** die Befestigungsklammer (1) aus einem Metall oder einer Metalllegierung ausgeführt ist oder aus einem Kunststoffmaterial, wie Polyamid, Polyoxymethylen oder Polybutylenterephthalat besteht.

13. System nach einem der vorhergehenden Ansprüche, **dadurch gekennzeichnet, dass** als flächiges Element (19) eine Dämmplatte oder ein Dämmkörper zur akustischen und/oder thermischen Dämmung im Automobil-Bereich verwendet wird.

14. Befestigungsklammer (1) zur Festlegung eines flächigen Elements (19), das eine Aussparung (22) aufweist, an einem Bauelement (20), das eine Öffnung (18) mit wenigstens einer Rasteinrichtung (21) aufweist, wobei die Befestigungsklammer (1) einen Anlageabschnitt (2) mit mindestens einer Anlageebene (3) zur Anlage an einer ersten, von der Öffnung (18) abgewandten Seite (24) des flächigen Elements (19) aufweist, wobei die Befestigungsklammer (1) ein elastisches erstes Halteelement (6) aufweist, das mit dem Anlageabschnitt (2) verbunden und so ausgebildet ist, dass es nach Festlegung des flächigen Elements (19) am Bauelement (20) durch die Aussparung (22) des flächigen Elements (19) hindurch in die Öffnung (18) eingreift, wenn die Anlageebene (3) auf der ersten Seite (24) des flächigen Elements (19) aufliegt, **dadurch gekennzeichnet, dass** die Befestigungsklammer (1) ein elastisches zweites Halteelement (7) aufweist, das mit dem Anlageabschnitt (2) verbunden und so ausgebildet ist, dass es vor der Festlegung des flächigen Elements (19) am Bauelement (20) durch die Aussparung (22) des flächigen Elements (19) hindurch das flächige Element (19) an einer zweiten Seite (25) des flächigen Elements (19) so hintergreift, dass durch die Befestigungsklammer (1) eine Anpresskraft auf die zweite Seite (25) des flächigen Elements (19) ausgeübt wird, wenn die Anlageebene (3) auf der ersten Seite (24) des flächigen Elements (19) aufliegt und wobei das zweite Halteelement (7) der Befestigungsklammer (1) einen ersten Schenkel (13) aufweist und in einen zweiten Schenkel (14) mündet, wobei der erste Schenkel (13) und der zweite Schenkel (14) einen spitzen Winkel einschließen.

15. Flächiges Element (19) zur Verwendung in einem System gemäß einem der Ansprüche 1 bis 13, in dessen Aussparungen (22) Befestigungsklammern (1) gemäß Anspruch 14 vormontiert angeordnet sind.

## Claims

1. A system comprising a flat element (19), a component (20) and a fastening clip (1) for fixing the flat element (19), which has a recess (22), to the component (20), which has an opening (18) having at least one latching device (21), by means of the fastening clip (1), which has a contact section (2) having at least one contact plane (3) for contacting a first side (24) of the flat element (19) facing away from the opening (18), wherein the fastening clip (1) has an elastic first holding element (6) which is connected to the contact section (2) and is designed such that after the flat element (19) is fixed on the component (20), the elastic first holding element engages in the opening (18) through the recess (22) of the flat element (19) when the contact plane (3) rests on the first side (24) of the flat element (19), **characterized in that** the fastening clip (1) has an elastic second holding element (7) which is connected to the contact section (2) and is designed such that before the flat element (19) is fixed to the component (20), the elastic second holding element engages behind the flat element (19) through the recess (22) of the flat element (19) on a second side (25) of the flat element (19), so that a pressing force is exerted by the fastening clip (1) on the second side (25) of the flat element (19) when the contact plane (3) rests on the first side (24) of the flat element (19) and wherein the second holding element (7) of the fastening clip (1) has a first leg (13) and opens into a second leg (14), wherein the first leg (13) and the second leg (14) enclose an acute angle.

2. The system according to claim 1, **characterized in that** the opening (18) is designed as a bore (18) and the latching device (21) as at least one groove (23) or as a thread (21) with at least one thread groove (23), wherein the first holding element (6) of the fastening clip (1) engages in the groove (23) or threaded groove (23) when the contact plane (3) rests on the first side of the flat element (19), so that the fastening clip (1) is fixed in the groove (23) or threaded groove (23) in an axial direction to the opening (18).

3. The system according to one of the preceding claims, **characterized in that** the first holding element (6) of the fastening clip (1) has a first leg (8) and opens into a second leg (9), wherein the first leg (8) and the second leg (9) enclose an acute angle.

4. The system according to claim 3, **characterized in that** the first leg (8) and the second leg (9) of the first holding element (6) are spaced apart from one another by a connecting element (10), wherein the first leg (8) and the second leg (9) are aligned such that they are aligned parallel to one another or enclose an angle of up to 20°, preferably less than 10°.

5. The system according to claim 3 or claim 4, **characterized in that** a first holding section (11) is formed at one end of the second leg (9) of the first holding element (6) and is aligned to the second leg (9) of the first holding element (6) at an angle of 25° to 65°, preferably between 35° to 55° on a side of the first holding element (6) facing the groove (23) or threaded groove (23).

6. The system according to one of claims 3 to 5, **characterized in that** the first holding element (6) is tapered towards a holding element tip.

7. The system according to one of claims 3 to 6, **characterized in that** the first leg (8) of the first holding element (6) has a bead or a bulge (12).

8. The system according to one of claims 3 to 7, **characterized in that** an angle of 25° to 65°, preferably between 35° to 55°, is provided between the first leg (13) and the second leg (14) of the second holding element (7).

9. The system according to one of claims 4 to 8, **characterized in that** at one end of the second leg (14) of the second holding element (7), a second holding portion (15) is provided branching at an angle from the second leg (14) of the second holding element (7) and pointing to the first leg (13).

10. The system according to one of the preceding claims, **characterized in that** the second holding element (7) is connected to the contact section (2) on a swivel plane (4), the swivel plane (4) being elastically connected to the contact plane (3).

11. The system according to claim 10, **characterized in that** the swivel plane (4) is spaced from the contact plane (3) by at least one spacing element (16).

12. The system according to one of the preceding claims, **characterized in that** the fastening clip (1) is made of a metal or a metal alloy or consists of a plastic material such as polyamide, polyoxymethylene or polybutylene terephthalate.

13. The system according to one of the preceding claims, **characterized in that** an insulating plate or an insulating body for acoustic and/or thermal insulation in the automotive field is used as the flat element (19).

14. A fastening clip (1) for fixing a flat element (19), which has a recess (22), to a component (20), which has an opening (18) having at least one latching device (21), wherein the fastening clip (1) has a contact section (2) having at least one contact plane (3) for contacting a first side (24) of the flat element (19) facing away from the opening (18), wherein the fastening clip (1) has an elastic first holding element (6) which is connected to the contact section (2) and is formed such that after the flat element (19) has been fixed to the component (20), the elastic first holding element engages in the opening (18) through the recess (22) of the flat element (19), when the contact plane (3) rests on the first side (24) of the flat element (19), **characterized in that** the fastening clip (1) has an elastic second holding element (7) which is connected to the contact section (2) and is formed such that before the flat element (19) has been fixed to the component (20), the elastic second holding element engages behind the flat element (19) through the recess (22) of the flat element (19) on a second side (25) of the flat element (19) so that a pressing force is exerted by the fastening clip (1) on the second side (25) of the flat element (19) when the contact plane (3) rests on the first side (24) of the flat element (19) and wherein the second holding element (7) of the fastening clip (1) has a first leg (13) and opens into a second leg (14), wherein the first leg (13) and the second leg (14) enclose an acute angle.

15. A flat element (19) for use in a system according to any one of claims 1 to 13, in the recesses (22) of which fastening clips (1) according to claim 14 are arranged preassembled.

## Revendications

1. Système comprenant un élément plat (19), un composant (20) et une pince de fixation (1) pour la fixation de l'élément plat (19), qui présente un évidement (22), sur le composant, (20) qui présente une ouverture (18) comportant au moins un dispositif d'encliquetage (21), au moyen de la pince de fixation (1), qui comporte une section d'appui (2) présentant au moins un plan d'appui (3) pour l'appui sur un premier côté (24) de l'élément plat (19) opposé à l'ouverture (18), dans lequel la pince de fixation (1) comporte un premier élément de retenue (6) élastique relié à la section d'appui (2) et conçu de telle manière que, après la fixation de l'élément plat (19) sur le composant (20), ledit premier élément de retenue vient en prise à travers l'évidement (22) de l'élément plat (19) dans l'ouverture (18) lorsque le plan d'appui (3) repose sur le premier côté (24) de l'élément plat (19), **caractérisé en ce que** la pince de fixation (1) comporte un second élément de retenue élastique (7) relié à la section d'appui (2) et conçu de telle manière que, avant la fixation de l'élément plat (19) sur le composant (20), ledit second élément de retenue vient en prise derrière l'élément plat (19) sur un second côté (25) de l'élément plat (19) à travers l'évidement (22) de l'élément plat (19) de telle manière qu'une force de pression soit exercée par la pince de fixation (1) sur le second côté (25) de l'élément plat (19) lorsque le plan d'appui (3) repose sur le premier côté (24) de l'élément plat (19), et dans lequel le second élément de retenue (7) de la pince de fixation (1) comporte une première branche (13) et débouche dans une seconde branche (14), dans lequel la première branche (13) et la seconde branche (14) forment un angle aigu.

2. Système selon la revendication 1, **caractérisé en ce que** l'ouverture (18) est réalisée sous la forme d'un alésage (18) et **en ce que** le dispositif d'encliquetage (21) est réalisé sous la forme d'au moins une rainure (23) ou d'un filetage (21) comportant au moins une gorge filetée (23), dans lequel le premier élément de retenue (6) de la pince de fixation (1) vient en prise dans la rainure (23) ou la gorge filetée (23) lorsque le plan d'appui (3) repose sur le premier côté de l'élément plat (19), de sorte que la pince de fixation (1) est fixée dans la rainure (23) ou la gorge filetée (23) dans une direction axiale par rapport à l'ouverture (18).

3. Système selon l'une des revendications précédentes, **caractérisé en ce que** le premier élément de retenue (6) de la pince de fixation (1) comporte une première branche (8) et débouche dans une seconde branche (9), dans lequel la première branche (8) et la seconde branche (9) forment un angle aigu.

4. Système selon la revendication 3, **caractérisé en ce que** la première branche (8) et la seconde branche (9) du premier élément de retenue (6) sont espacées l'une de l'autre par un élément de liaison (10), dans lequel la première branche (8) et la seconde branche (9) sont orientées de telle manière qu'elles sont parallèles entre elles ou forment un angle allant jusqu'à 20 °, de préférence inférieur à 10°.

5. Système selon la revendication 3 ou 4, **caractérisé en ce qu'**une première section de retenue (11) est réalisée à une extrémité de la seconde branche (9) du premier élément de retenue (6), laquelle première section de retenue est orientée selon un angle de 25 ° à 65 °, de préférence entre 35 ° et 55 °, sur un côté du premier élément de retenue (6) orienté vers la rainure (23) ou la gorge filetée (23) par rapport à la seconde branche (9) du premier élément de retenue (6).

6. Système selon l'une des revendications 3 à 5, **caractérisé en ce que** le premier élément de retenue (6) est conçu de manière effilée vers une pointe d'élément de retenue.

7. Système selon l'une des revendications 3 à 6, **caractérisé en ce que** la première branche (8) du premier élément de retenue (6) présente un bourrelet ou un renflement (12).

8. Système selon l'une des revendications 3 à 7, **caractérisé en ce qu'**un angle de 25 ° à 65 °, de préférence compris entre 35 ° et 55 °, est prévu entre la première branche (13) et la seconde branche (14) du second élément de retenue (7).

9. Système selon l'une des revendications 4 à 8, **caractérisé en ce qu'une** seconde section de retenue (15) est prévue à une extrémité de la seconde branche (14) du second élément de retenue (7), laquelle seconde section de retenue se ramifie en un angle à partir de la seconde branche (14) du second élément de retenue (7) et est orientée vers la première branche (13).

10. Système selon l'une des revendications précédentes, **caractérisé en ce que** le second élément de retenue (7) est relié à la section d'appui (2) au niveau d'un plan de pivotement (4), dans lequel le plan de pivotement (4) est relié élastiquement au plan d'appui (3).

11. Système selon la revendication 10, **caractérisé en ce que** le plan de pivotement (4) est espacé du plan d'appui (3) par au moins un élément d'espacement (16).

12. Système selon l'une des revendications précédentes, **caractérisé en ce que** la pince de fixation (1) est constituée d'un métal ou d'un alliage métallique ou est constituée d'une matière plastique telle que le polyamide, le polyoxyméthylène ou le téréphtalate de polybutylène.

13. Système selon l'une des revendications précédentes, **caractérisé en ce qu'**un panneau isolant ou un corps isolant pour l'isolation acoustique et/ou thermique dans le secteur automobile est utilisé comme élément plat (19).

14. Pince de fixation (1) pour la fixation d'un élément plat (19) présentant un évidement (22) sur un composant (20) qui présente une ouverture (18) comportant au moins un dispositif d'encliquetage (21), dans laquelle la pince de fixation (1) comporte une section d'appui (2) présentant au moins un plan d'appui (3) pour l'appui sur un premier côté (24) de l'élément plat (19) opposé à l'ouverture (18), dans laquelle la pince de fixation (1) comporte un premier élément de retenue (6) élastique relié à la section d'appui (2) et conçu de telle manière que, après la fixation de l'élément plat (19) sur le composant (20), ledit premier élément de retenue vient en prise à travers l'évidement (22) de l'élément plat (19) dans l'ouverture (18) lorsque le plan d'appui (3) repose sur le premier côté (24) de l'élément plat (19), **caractérisée en ce que** la pince de fixation (1) comporte un second élément de retenue élastique (7) relié à la section d'appui (2) et conçu de telle manière que, avant la fixation de l'élément plat (19) sur le composant (20), ledit second élément de retenue vient en prise derrière l'élément plat (19) sur un second côté (25) de l'élément plat (19) à travers l'évidement (22) de l'élément plat (19) de telle manière qu'une force de pression soit exercée par la pince de fixation (1) sur le second côté (25) de l'élément plat (19) lorsque le plan d'appui (3) repose sur le premier côté (24) de l'élément plat (19), et dans laquelle le second élément de retenue (7) de la pince de fixation (1) comporte une première branche (13) et débouche dans une seconde branche (14), dans laquelle la première branche (13) et la seconde branche (14) forment un angle aigu.

15. Élément plat (19) destiné à être utilisé dans un système selon l'une des revendications 1 à 13, dans les évidements (22) duquel des pinces de fixation (1) selon la revendication 14 préassemblées sont disposées.
